# EUROPEAN PATENT APPLICATION

(11) **EP 1 101 411 A1**
(43) Date of publication of application: **23.05.2001**
(21) Application number: 00302080.7
(22) Date of filing: 15.03.2000
(51) Int. Cl.: A23K 1/14, A23K 1/18

(54) **Animal feed**

(30) Priority: 15.11.1999 GB 9926919
(71) Applicant: Park Tonks Limited, GT. Abington, Cambridge CB1 6AS (GB)
(72) Inventor: Tonks, William Park, Gt. Abington, Cambridge CB1 6AS (GB)
(74) Representative: Evens, Paul Jonathan

(57) **Abstract**

An animal feed for piglets comprises a blend of dried fruit and vegetable matter having a total antioxidant activity of at least 10mM/kg. The blend of dried fruit and vegetable matter provides a valuable source of phytochemicals, especially secondary metabolites and particularly phenolics. It is believed that such chemicals are important to the healthy development of young mammals such as piglets, particularly in the early stages just before and when solid food is first introduced.

## Description

The present invention relates to an animal foodstuff or feed, particularly but not exclusively to an animal feed for piglets, especially pre-weaned and newly-weaned piglets.

The economic advantages of producing more piglets per sow per year moved the British pig industry from 8 week weaning to 3-4 week weaning. This removed the naturally slow transition from milk to solid feed, and created a system of abrupt weaning where the piglet has to adapt immediately to solid food. It has proved to be a very stressful period for the piglet, which does not possess the digestive competence to ensure adequate feed intake to optimise its true growth potential. The stress of the process leads to a plethora of problems, most notably enteric disease, respiratory disease and anorexia, most of which must be controlled by incorporating either antibiotic growth promoters or prescription antibiotics to avoid excessive mortality. Financially, it is the lost growth of the piglet in the 3-week 'transition' period post-weaning which is most harmful.

Many enzymes, particularly those which aid digestion of starch and carbohydrate, are not naturally occurring in the baby piglet. Instead enzyme production is stimulated by the ingestion of nutrient sources which require the activating enzyme. In an attempt to start enzyme production, piglets aged between 14-21 are offered a pelleted feed known in the industry as 'pig creep'. Pig creep is a nutritionally balanced blend of processed cereals (predominantly wheat, barley and maize), animal and vegetable proteins, milk powders (whey/skim), fats, vitamins, minerals, acidifiers, growth promoters and synthetic flavours. However, conventional creep feeds are poorly accepted by pre-weaned piglets, with the result that the piglets are weaned digestively naive and incapable of properly utilising the principal energy sources of the solid feed provided. Therefore, consumption of solid feed is low in newly weaned piglets (perhaps 10-14 days post weaning) and as a consequence growth is impaired and stress is unavoidable (as much because of constant hunger as anything else) .

The present applicant has appreciated that piglets reared under intensive systems do not maintain a health status or grow to their genetic potential. The present applicant has further appreciated that current feeding practices do not specifically supply the immune boosting nutrients or digestible fibres required for the development of the gastro-intestinal tract. Accordingly, the present applicant has developed a novel animal feed which alleviates some of the problems encountered with early weaning of piglets when fed to pre-weaned and newly-weaned piglets.

In accordance with a first aspect of the present invention, there is provided an animal feed for piglets, comprising a blend of dried fruit and vegetable matter. The animal feed may have a total anti-oxidant activity (TEAC) of at least 10mM/kg, and perhaps at least 100mM/kg.

The blend of dried fruit and vegetable matter provides a valuable source of phytochemicals, especially secondary metabolites and particularly phenolics. The present applicant believes that such nutraceuticals are important to the healthy development of young mammals such as piglets, particularly in the early stages just before and when solid food is first introduced. The phenolics (e.g. bioflavanoids, carotenoids and anthocyanins) present in the blend would normally be found in the piglets natural habitat when foraging for food. The phenolics have a particular chemical structure enabling them to be potent antioxidants that scavenge/quench electrically-charged oxygen molecules (free radicals). If free radicals are not controlled in young mammals (e.g. piglets), cell damage may occur, resulting particularly from destruction of immune boosting groups of compounds known as cytokines. The destruction of cytokines may dramatically reduce the ability of piglets to overcome disease challenge, with consequential increases in mortality.

The antioxidant activity may be derived solely from the dried fruit and vegetable matter in the blend. Alternatively, phyto-antioxidants may be added to the blend (for example, anthocyanins from pine bark extract). In the former case, the blend would preferably have a phenolics content of at least 150 mg/g, and perhaps even at least 500 mg/g. The desired phenolics content level may be achieved with major phenolics alone. The major phenolics may be selected from the group consisting of hydroxycinnamates, conjugated flavanols (glycocytes) and catechins. The flavanols include, *inter alia,* bioflavanoids and carotenoids.

The fruit and vegetable matter in the blend may be selected from the group consisting of sun-dried, microwave-dried, vacuum-dried, freeze-dried and spray-dried produce. It is preferred that the fruit and vegetable produce is dehydrated without being exposed to high temperatures (e.g. those experienced during baking), otherwise the naturally occurring phytochemicals which are beneficial to animals may be compromised.

The ratio of dried fruit to dried vegetable matter in the blend may be approximately 1:4. Thus, in the absence of any bulking agent, perhaps 80% by weight of the blend may be dried vegetable matter, with the balance being dried fruit. The dried vegetable matter may include one or more components selected from the group consisting of potato, cabbage, broccoli, cauliflower, celery, spinach, onion, garlic, sweet potato, radish, turnip, carrot, beetroot and lotus bulb. The dried fruit may include one or more components selected from the group consisting of apple, date, apricot, citrus fruit (lemon, orange, grapefruit etc), blackberry, cranberry, elderberry, bilberry, grape, papaya, melon, raspberry, strawberry and tomato.

The dried vegetable matter in the blend may consist of carrot, broccoli, cauliflower and garlic. The carrot, broccoli, cauliflower and garlic may be present in the ratios 2:1:1:4 respectively. The dried fruit in the blend may consist of apple, date and elderberry. The apple, date and elderberry may be present in the ration 3:3:2 respectively.

The dried fruit and vegetable matter in the blend may be presented as chunks or flakes. The chunks or flakes may be sized so that perhaps 90% have a maximum dimension in the range 5-10mm. The texture of the animal feed may be important to some animals, particularly those like piglets which develop a natural rooting behaviour. By utilising instructive behaviour, it is believed that young animals such as piglets may quickly develop a better intake of food. This factor, combined with the beneficial properties of animal feed according to the present invention, may enable increased gut activity and balance to be achieved, resulting in less challenge to immune status (enhanced immunity against disease) and better growth. It is believed that chunks and flakes may be more readily accepted than pelleted feeds like pig creep. In addition, an animal feed consisting of chunks and flakes is likely to be less dusty and more palatable than friable pelleted feeds.

In accordance with another aspect of the present invention, there is provided a method of feeding young mammals such as piglets, comprising: providing pre-weaned piglets with an animal feed in accordance with a first aspect of the present invention; weaning the piglets; and providing the weaned piglets with solid food, at least a portion of which is the animal feed in accordance with a first aspect of the present invention.

The pre-weaned piglets provided with the animal feed may be aged 14-21 days. The pre-weaned piglets may be provided with the animal feed for at least 7 days prior to weaning. The weaned piglets may be provided with the animal feed for at least 10 days. The solid food provided post-weaning may comprise about 50% by weight conventional feed (e.g. pig creep) and about 50% by weight the animal feed according to the first aspect of the present invention.

In pig farming, aspects and embodiments of the present invention may enable farmers:
- to recreate the piglet's natural rooting behaviour under modern feeding conditions
- to stimulate early solid food consumption
- to stimulate enzyme systems and bacterial action in the gut, promoting hind gut development
- to encourage the early uptake of conventional "Piglet Creep" pellets
- to encourage the development of the immune system of the young piglet
- to assist the health status of the piglet, reducing post-weaning checks
- to produce more contented piglets as a result of reduced stress
- to improve feed consumption in post-weaned anorexic pigs, especially when the animal feed is mixed 50:50 with "Piglet Creep"

In pig farming, embodiments of the present invention may:
- be highly palatable to young pigs
- be a rich source of antioxidants and free radical scavengers
- have a known balanced source of Quercetin, Catechin, Indoles, Lutein, Carotenoids, Anthocyanin's, Flavenoids etc.
and have been shown
- to improve immunity i.e. lgF-1 levels. An indicator of multiple animal stressors
- to enhance gut epithelial cells and mucus membranes
- to experiment and see if saponins are strong adjuvants which will enhance the specific immune responses of animals
- to accelerate endogenous enzyme activity i.e. Lactase and Amylase etc.
- to eliminate the need for "infeed" medication

In accordance with another aspect of the present invention, there is provided an animal feed having a total anti-oxidant activity (TEAC) of at least 10 mM/Kg. The total anti-oxidant activity may be at least 14 mM/Kg.

An embodiment of the invention will now be described by way of example.

An animal feed is provided from a blend dried (dehydrated, but not cooked) fruit and dried vegetable matter. The composition of the blend is as follows (percentages by weight):

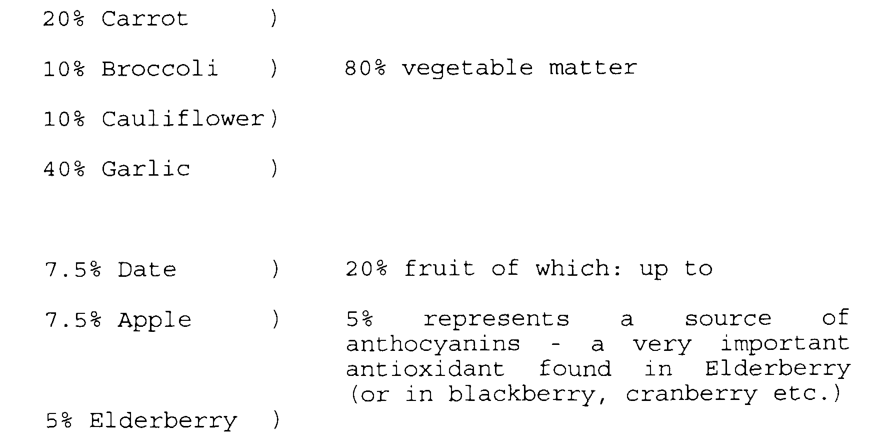

The blend chosen provides a total anti-oxidant activity of 14.2 mM/kg. The total anti-oxidant activity is measured by a standard test, known as a TEAC test. A modified TEAC test is described in an article entitled "Antioxidant Activity Applying an Improved ABTS Radical Cation Decolorization Assay" in Free Radical Biology & Medicine, Vol. 26, No. 11/12. The method for the screening of antioxidant activity, is a decolourisation assay applicable to both lipophilic and hydrophilic antioxidants, including flavenoids, hydroxycinnamates, carotenoids and plasma antioxidants. The preformed radical monocation 2,2'-azinobis-(3-ethylbenzothiazoline-6-sulphonic acid) is generated by oxidation of ABTS potassium persulphate and is reduced in the presence of such hydrogen-donating antioxidants. The influences of both the concentration of antioxidant and duration of reaction on the inhibition of the radical cation absorption are taken into account when determining the antioxidant activity.

The blend was analysed for major phenolics and found to contain:

| | |
|---|---|
| 142.5 mg/g | hydroxycinnamates |
| 4.98 mg/g | conjugated flavanols (glycocytes) |
| 12.3 mg/g | catechins |

Hence the level of major phenolics was 159.78 mg/g.

The blend consists of chunks and flakes of dried fruit and vegetable matter. At least 90% by weight of the chunks and flakes have a maximum dimension in the range 5-10mm.

A second animal feed comprising a similar blend of dried fruit and dried vegetable matter was tested as before, and found to have a total anti-oxidant activity of 131.5 mM/kg, and a major phenolics content of 769.1 mg/g of which 347.8 mg/g is due to hydroxycinnamates and 421.3 mg/g due to conjugated flavanols. The increase in anti-oxidant activity and major phenolics content is attributed to the "freshness" and careful drying of the raw materials.

Comparative experimental results of providing some piglets with an animal feed embodying the present invention ("Piglet Breakfast" feed) and other piglets with a standard commercial creep diet ("Control" feed) are attached. The Piglet Breakfast feed comprises a blend of dried carrots, broccoli, dates, potato, onion, apple, garlic and cabbage.

Table 1 shows how the average unit weight of a newly-weaned piglet changes with time and how this depends upon diet. Use of Piglet Breakfast feed at weaning facilitated a 9.7% increase in daily liveweight gain. (An improvement of 5.5% in feed conversion ratio was also noted at 45 days for piglets provided with Piglet Breakfast feed, as opposed to the control feed. This is calculated on the basis of average daily food intake being 0.334 kg for piglets provided with Piglet Breakfast feed, and 0.32 kg for piglets provided with the control feed). In commercial terms, the Piglet Breakfast feed improved the value per piglet by £0.32 when compared to the control feed (based on £0.80 per kg and cost of creep and feed conversion benefit).

Table 2 shows how the average unit weight of a pre-weaned piglet (on the sow) changes with time and how this depends upon diet. Crucially, the daily liveweight gain (3-21 days) is around 15% greater for piglets provided with Piglet Breakfast feed than for those provided with control feed. This is important because a heavier weaner will mean a sturdier pig to move on to the post-weaner feed with less check. Furthermore, as other studies have shown, a heavier weaner is more likely to reach optimum (finishing) weight in less time.

**TABLE 1**

| | AVERAGE UNIT WEIGHT OF PIGLET (KG) | |
|---|---|---|
| AGE (DAYS) | PIGLET BREAKFAST FEED | CONTROL FEED |
| 21 | 5.86 | 6.36 |
| 30 | 9.02* | 8.93* |
| 45 | 13.57 | 13.38 |

| | | |
|---|---|---|
| * Estimated from daily liveweight gain figures | | |

**TABLE 2**

| | AVERAGE UNIT WEIGHT OF PIGLET (KG) | | | |
|---|---|---|---|---|
| AGE (DAYS) | PIGLET BREAKFAST FEED | CONTROL FEED | Isd | p |
| 3 | 2.04 | 2.25 | 0.18 | 0.07 |
| 13 | 3.73 | 3.92 | 0.28 | |
| 21 | 6.44 | 5.99 | 0.56 | 0.09 |
| Isd = Standard deviation | | | | |
| p = level of significance | | | | |

## Claims

1. An animal feed for piglets, comprising a blend of dried fruit and vegetable matter.

2. An animal feed according to claim 1, having a total anti-oxidant activity (TEAC) of at least 10mM/kg.

3. An animal feed according to claim 1 or 2, in which the blend has a total phenolics content of at least 150 mg/g.

4. An animal feed according to claim 3, in which major phenolics contribute at least 150 mg/g to the total phenolics content.

5. An animal feed according to claim 4, in which the major phenolics are selected from the group consisting of hydroxy-cinnamates, conjugated flavanols (glycocytes) and catechins.

6. An animal feed according to any one of the preceding claims, in which the fruit and vegetable matter in the blend is selected from the group consisting of sun-dried, microwave-dried, vacuum-dried, freeze-dried and spray-dried produce.

7. An animal feed according to any one of the preceding claims, in which the ratio of dried fruit to dried vegetable matter in the blend is approximately 1:4.

8. An animal feed according to claim 7, in which 80% by weight of the blend comprises dried vegetable matter.

9. An animal feed according to any one of the preceding claims, in which the vegetable matter includes one or more components selected from the group consisting of potato, cabbage, broccoli, cauliflower, celery, spinach, onion, garlic, sweet potato, radish, turnip, carrot, beetroot and lotus bulb.

10. An animal feed according to any one of the preceding claims in which the fruit in the blend includes one or more components selected from the group consisting of apple, date, apricot, citrus fruit, elderberry, bilberry, grape, papaya, melon, raspberry, strawberry and tomato.

11. An animal feed according to claim 9, in which the dried vegetable matter consists of carrot, broccoli, cauliflower and garlic.

12. An animal feed according to claim 11, in which the carrot, broccoli, cauliflower and garlic are present in the ratios 2:1:1:4 respectively.

13. An animal feed according to claim 10, in which the dried fruit consists of apple, date and elderberry.

14. An animal feed according to claim 13, in which the apple, date and elderberry are present in the ratios 3:3:2 respectively.

15. An animal feed according to any one of the preceding claims, in which the blend comprises chunks or flakes of dried fruit and vegetable matter.

16. An animal feed according to claim 15, in which around 90% of the chunks or flakes are sized to have a maximum dimension in the range 5-10mm.

17. A foodstuff supplement comprising an animal feed according to any one of claims 1 to 16.

18. A method of feeding a piglet, comprising:
providing a pre-weaned piglet with an animal feed in accordance with any one of claims 1 to 17; weaning the piglet; and providing the weaned piglet with solid food, at least a portion of which is the animal feed according to any one of claims 1 to 17.

19. A method according to claim 18, in which the pre-weaned piglet is aged 14-21 days when provided with the animal feed.

20. A method according to claim 18 or 19, in which the pre-weaned piglet is provided with the animal feed for at least 7 days prior to weaning.

21. A method according to any one of claims 18,19 or 20, in which the weaned piglet is provided with the solid food comprising the animal feed for at least 10 days.

22. A method according to any one of claims 18 to 21, in which the animal feed is present in an amount of 50% by weight of the solid feed provided to the weaned piglet.
